Europäisches Patentamt

European Patent Office

Office européen des brevets

(19)

(11) **EP 0 899 052 A1**

(12) **DEMANDE DE BREVET EUROPEEN**

(43) Date de publication:
**03.03.1999 Bulletin 1999/09**

(51) Int Cl.⁶: **B23K 35/40**, C21D 9/60

(21) Numéro de dépôt: **98402028.9**

(22) Date de dépôt: **11.08.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **12.08.1997 FR 9710292**

(71) Demandeur: **LA SOUDURE AUTOGENE FRANCAISE**
**F-75007 Paris (FR)**

(72) Inventeurs:
• **Bonnet, Christian**
  **95420 Saint-Gervais (FR)**
• **Astier, Denis**
  **95300 Ennery (FR)**

(74) Mandataire: **Le Moenner, Gabriel**
**L'AIR LIQUIDE,**
**Service Brevets et Marques**
**75321 Paris Cédex 07 (FR)**

(54) **Procédé de fabrication d'un fil fourré avec recuit de récristallisation**

(57) L'invention a trait à un procédé et à un dispositif de fabrication d'un tube métallique, notamment un fil fourré de soudage, contenant des éléments de remplissage, comprenant au moins une étape de recuit de recristallisation réalisée par chauffage par induction à haute fréquence, de préférence à une fréquence d'au moins 10 kHz.

L'invention concerne également l'utilisation du fil fourré ainsi obtenu pour la mise en oeuvre d'un procédé de soudage à l'arc électrique, tel un procédé de soudage TIG, MIG, MAG, à l'arc submergé ou vertical sous laitier.

EP 0 899 052 A1

## Description

La présente invention se rapporte au domaine de la fabrication de tubes métalliques soudés, remplis d'éléments de remplissage, tels les fils fourrés destinés au soudage, mettant en oeuvre une ou plusieurs étapes de recuit de recristallisation à haute fréquence.

De manière classique, lorsque l'on souhaite réduire le diamètre d'un tube métallique contenant ou non des éléments de remplissage, tel un fil fourré de soudage, on soumet ledit tube métallique à une ou plusieurs étapes de laminage et/ou tréfilage de celui-ci.

Cependant, il est également connu que la réduction de diamètre par laminage et/ou tréfilage d'un tube métallique engendre le phénomène métallurgique d'écrouissage.

Or, lorsque le taux d'écrouissage augmente, c'est-à-dire lorsque le taux de réduction global du tube croit, on assiste à une augmentation de la dureté du matériau et à une diminution de sa capacité à subir des déformations ultérieures sans rupture.

En d'autres termes, il existe un certain seuil ou taux de réduction critique au-delà duquel apparaissent des problèmes de rupture du tube.

Actuellement, pour pouvoir poursuivre le laminage et/ou le tréfilage du tube au-delà de ce seuil ou taux critique, on régénère la structure du matériau en effectuant un recuit de recristallisation de celle-ci.

A cette fin, on procède à un chauffage du matériau du tube, à une température supérieure à la température dite de recristallisation.

Cette température de recristallisation dépend de la nature du matériau constituant le tube métallique.

Ainsi, elle est de l'ordre de 600°C pour un acier doux et de l'ordre de 750°C pour un acier inoxydable austénitique, par exemple.

Habituellement, cette opération de recuit de recristallisation est réalisée dans un four statique ou dans un four à passage.

Le temps de maintien au-dessus de la température de recristallisation va de quelques heures (pour un four statique) à quelques minutes (pour un four à passage).

Or, il a été observé que lorsque l'on faisait subir un tel recuit de recristallisation à un tube métallique rempli d'éléments de remplissage, tel un fil fourré, il se produit des réactions chimiques indésirables entre au moins une partie des différents constituants contenus dans les éléments de remplissage.

Ainsi, les fils fourrés de soudage de type rutile contiennent, en général, des éléments de remplissage constitués d'un mélange de poudres de fer et de ferroalliages qui, alliés à l'enveloppe du fil fourré, confère à la soudure une composition chimique adaptée à la résistance mécanique recherchée, des éléments ionisants permettant d'améliorer la stabilité de l'arc électrique, des oxydes, tels $TiO_2$, $Al_2O_3$ ou $SiO_2$, destinés à former un laitier dont les propriétés physiques, notamment de température de fusion, de viscosité et de tension superficielle, sont à l'origine des qualités opératoires de ce type de fil fourré, et des désoxydants puissants, tels Mg, Al ou AlMg, qui permettent d'abaisser la teneur en oxygène du métal fondu déposé en améliorant ainsi les propriétés de ténacité de la soudure.

Or, si un tel mélange de poudre est porté à haute température, par exemple à 700°C, au cours d'un traitement de recuit de recristallisation de l'enveloppe externe du tube le contenant, il se produit des réactions d'oxydoréduction plus ou moins complètes entre les divers constituants de la poudre de remplissage, lesquelles sont susceptibles de rendre le fil impropre à sa destination.

Le but de la présente invention est donc de proposer un procédé permettant d'obtenir un recuit de recristallisation efficace d'un tube métallique contenant des éléments de remplissage, tel un fil fourré de soudage, lequel procédé n'engendre pas ou peu d'altération des éléments de remplissage contenus par ledit tube.

L'invention concerne alors un procédé de fabrication d'un tube métallique contenant des éléments de remplissage, comprenant au moins une étape de recuit de recristallisation réalisée par chauffage par induction à haute fréquence.

Selon le cas, le procédé de l'invention peut comprendre l'une ou plusieurs des caractéristiques suivantes:

- la fréquence est d'au moins 10 kHz, de préférence d'au moins 100 kHz, et avantageusement entre 250 kHz et 500 kHz environ;
- au moins une étape de recuit de recristallisation est réalisée subséquemment à au moins une étape de réduction du diamètre du tube par laminage et/ou tréfilage;
- il comprend, subséquemment à une étape de recuit de recristallisation, au moins une étape de refroidissement du tube;
- la température de recristallisation est supérieure ou égale à 700°C, de préférence supérieure ou égale à 750°C;
- les éléments de remplissage du tube comprennent au moins une poudre métallique choisie parmi les poudres de fer, de ferro-silicium, de silico-manganèse, de manganèse, de ferro-silico-titane, de magnésium, d'aluminium et leurs mélanges.

- le tube métallique est un fil fourré.


L'invention concerne également un fil fourré susceptible d'être obtenu par le procédé susmentionné, lequel fil fourré peut comprendre une enveloppe métallique en acier doux.

Un tel fil fourré est susceptible d'être utilisé pour la mise en oeuvre d'un procédé de soudage, tel un procédé de soudage TIG, MIG, MAG, à l'arc submergé et vertical sous laitier.

Plus précisément, les inventeurs de la présente invention ont mis en évidence que la régénération de l'enveloppe tubulaire, c'est-à-dire le recuit de recristallisation, peut être réalisée de manière efficace par un chauffage du tube ayant subit une ou plusieurs étapes de tréfilage et/ou laminage au moyen d'un inducteur à haute fréquence et qu'en procédant de la sorte, l'altération des éléments de remplissage ou poudre contenu par ledit tube est quasi-nulle ou minimale.

En effet, la profondeur de pénétration des courants haute fréquence encore appelée épaisseur de "peau" est définie par la formule suivante:

$$- \delta = \sqrt{\frac{\rho}{\pi\mu f}} \cong 500 \sqrt{\frac{\rho}{\mu r f}}$$

dans laquelle:

- $\mu = \mu_0$. $\mu_r$ est la perméabilité (en H.m$^{-1}$) magnétique du matériau (ici de l'enveloppe du tube);
- $\mu_0$ est la perméabilité magnétique du vide ($4\pi.10^{-7}$ H.m$^{-1}$);
- $\mu r$ est la perméabilité relative du matériau;
- $\rho$ est la résistivité du matériau (en $\Omega$.m);
- et $f$ est la fréquence du courant d'induction (en Hz).

Or, environ 87% de l'énergie de chauffage par effet Joule, est libérée, dans cette épaisseur de peau, par les courant induit.

De là, pour un matériau donné, la profondeur de pénétration est donc inversement proportionnelle à la racine carré de la fréquence du courant dans l'inducteur.

Dans le cas des aciers, la profondeur de pénétration est aussi fonction de la température puisque la perméabilité magnétique en dépend.

Par exemple, la profondeur de pénétration des courants haute fréquence est de 0,7 mm à la température ambiante (de l'ordre de 20°C) et de 17 mm à 1000°C pour une fréquence de 1 kHz, alors que, pour les mêmes températures, elle est respectivement de 0,22 mm et 5,4 mm pour une fréquence de 10 kHz, et de 0,04 mm et 1,1 mm pour une fréquence de 250 kHz.

Dans le cadre de la fabrication des fils fourrés destinés au soudage, le recuit de recristallisation est généralement effectué lorsque le diamètre du fil fourré est de l'ordre de 4 mm, c'est-à-dire pour une épaisseur de l'enveloppe tubulaire de l'ordre de 1,1 mm en moyenne.

Compte tenu de ce qui précède, pour minimiser le chauffage des éléments de remplissage contenus dans le fil fourré et afin d'éviter ou minimiser les réactions chimiques des divers constituants entre eux, il ne faut opérer un chauffage que sur la partie externe de l'enveloppe tubulaire en utilisant une fréquence suffisamment élevée, c'est-à-dire d'au moins 1 kHz; le reste de l'enveloppe tubulaire étant chauffé essentiellement par conduction thermique au-dessus de la température de recristallisation.

En d'autres termes, les inventeurs de la présente invention ont mis en évidence qu'en procédant de la sorte, l'élévation de la température des éléments de remplissage contenus dans le fil fourré est insuffisante pour engendrer des réactions chimiques indésirables entre les différents constituants desdits éléments de remplissage.

L'invention va maintenant être décrite plus en détail à l'aide d'exemples donnés à titre illustratif mais non limitatif.


Exemples


Les essais suivants ont été réalisés avec différents types de fils fourrés destinés au soudage des aciers de construction, lesquels comprennent une enveloppe en acier doux ayant une teneur en carbone de l'ordre de 0,04 %.

Le recuit de recristallisation est réalisé sur des fils tréfilés et/ou laminés jusqu'à des diamètres de 4 mm et 4,7 mm, selon le cas, et aux fréquences de 250 et 500 kHz; la puissance dans les inducteurs étant ajustée de manière à atteindre différentes températures en surface des fils fourrés.

Subséquemment à l'étape de recuit de recristallisation, les fils fourrés sont soumis à un refroidissement soit naturel à la température ambiante, soit par aspersion d'eau.

Après ces différents traitements, les échantillons sont prélevés afin d'en mesurer la dureté et d'examiner par métallographie si la recristallisation a effectivement eu lieu.

Les résultats obtenus ont été consignés dans le tableau I suivant.

TABLEAU I

| TYPE DE FIL FOURRE | TEMPERATURE (en °C) | REFROIDISSEMENT | RECRISTALLISATION | DURETE VICKERS |
|---|---|---|---|---|
| "sans laitier" | 600 | naturel | Non | n. d. |
| | | eau | Non | n. d. |
| | 670 | naturel | Non | 202 |
| | | eau | Non | 207 |
| | 750 | naturel | Oui | 110 |
| | | eau | Oui | 160 |
| | 800 | naturel | Oui | 110 |
| | | eau | Oui | 155 |
| | 900 | naturel | Oui | 115 |
| | | eau | Oui | 177 |
| Rutile | 600 | naturel | Non | n. d. |
| | | eau | Non | n. d. |
| | 670 | naturel | Non | 217 |
| | | eau | Non | 220 |
| | 750 | naturel | Oui | 116 |
| | | eau | Oui | 165 |
| | 800 | naturel | Oui | 114 |
| | | eau | Oui | 188 |
| | 900 | naturel | Oui | 117 |
| | | eau | Oui | 180 |
| n. d.: non déterminée | | | | |

Durant les essais, des résultats analogues ont été obtenus quels que soient le diamètre du fil fourré, la nature des poudres de remplissage et la haute fréquence utilisée.

Cependant, comme il ressort du tableau précédent, la température atteinte s'avère avoir une influence importante sur la recristallisation de l'enveloppe tubulaire.

En effet, il apparaît que dans ces conditions de traitement thermique très rapide, il est nécessaire d'atteindre une température plus élevée (au moins 750°C) que lors d'un traitement classique dans un four à passage ou un four statique durant lequel la température n'est, en général, que de 600°C.

En outre, les mesures de duretés montrent que lorsque la température atteinte a permis d'obtenir une recristallisation de l'enveloppe tubulaire, l'adoucissement résultant, c'est-à-dire la différence de dureté entre l'état non recristallisé et l'état recristallisé, est très différent selon le mode de refroidissement choisi et ce, malgré la très faible teneur en carbone de l'enveloppe tubulaire.

Plus précisément, les fils fourrés recristallisés et refroidis par aspersion d'eau conservent une dureté relativement élevée, malgré la recristallisation, et n'ont pas pu être subséquemment tréfilés jusqu'au diamètre de 1,2 mm sans rupture, alors que les fils fourrés refroidis de manière naturelle, c'est-à-dire par échange thermique avec l'atmosphère ambiant, présentent une dureté plus faible et ont pu être tréfilés sans rupture jusqu'audit diamètre de 1,2 mm.

De tels fils tréfilés au diamètre de 1,2 mm, ont été comparés à des fils fourrés ayant subi un traitement de recristallisation classique à 600°C pendant 1 heure en four statique et, d'autre part, avec des fils contenant les mêmes poudres de remplissage et fabriqués selon le procédé "Chemetron", lequel ne nécessite pas de traitement thermique intermédiaire étant donné que, par ce procédé, les fils sont formés et remplis de poudre au diamètre de 5 mm.

Il résulte de ces essais comparatifs, que:

- les fils selon l'invention recuits par haute fréquence et refroidis de manière naturelle ont un comportement opératoire similaire aux fils non recuits obtenus par le procédé "Chemetron";
- les fils traités en four statique conduisent à des arcs électriques beaucoup moins stables et à un taux de projection très supérieur, donc à des qualités opératoires nettement moins bonnes que les fils selon l'invention, ce qui confirme l'existence du problème de réaction entre eux, des différents éléments constituants les éléments de remplissage du fil fourré, lorsque ceux-ci sont soumis à un recuit de recristallisation par un procédé classique.

En d'autres termes, effectuer un recuit de recristallisation à haute fréquence suivi d'un refroidissement suffisamment lent permet une recristallisation efficace de l'enveloppe tubulaire, c'est-à-dire, une régénération de celle-ci, permettant de faire subir subséquemment audit tube des étapes de tréfilage et/ou laminage sans engendrer de rupture et tout en garantissant une qualité opératoire du fil fourré lors de sa mise en oeuvre dans un procédé de soudage, étant donné que les propriétés des éléments de remplissage ne sont pas affectées par le traitement thermique de recuit de recristallisation à haute fréquence.

Selon l'invention, des fréquences supérieures à 100 kHz sont préférées, par exemple des fréquences comprises entre 250 et 500 kHz.

Toutefois, il est possible d'utiliser des fréquences inférieures, mais la fréquence minimale utilisable ne devrait pas être inférieure à 10 kHz.

En effet, en procédant de la sorte, l'essentiel de l'énergie (87%) est libéré par effet Joule dans le quart extérieur de l'épaisseur tubulaire, lorsque le tube est à basse température, pour atteindre un peu plus du tiers de l'épaisseur à 700° (du fait de la variation de perméabilité magnétique), puis la totalité de l'épaisseur lorsque la température atteint et dépasse le point de Curie (769°C pour les aciers).

En outre, les différences observées quant à la dureté du matériau selon le mode de refroidissement choisi, après recuit de recristallisation, peuvent s'expliquer par la différence de vitesse de refroidissement qu'impliquent les deux modes de refroidissement choisi (naturel ou aspersion d'eau).

En effet, lorsque le refroidissement est "naturel", il s'écoule environ 30 secondes pour que le fil fourré passe de la température de recuit (supérieure à 700°C) à une température de l'ordre de 400°C, alors qu'un refroidissement par aspersion d'eau conduit à une durée de refroidissement jusqu'à la température ambiante de l'ordre de la seconde.

Des essais complémentaires (essais 1 à 4) ont montré que la dureté finale (dureté Vickers finale) après recristallisation et refroidissement jusqu'à la température ambiante (TA) est, en fait, principalement conditionnée par la durée du refroidissement entre la température de recristallisation (TR) et la température de 400°C environ.

Ainsi, les résultats d'essais donnés dans le tableau II suivant montrent qu'industriellement, il est avantageux de n'opérer qu'un refroidissement naturel (air calme) ou alors légèrement accéléré (par aspersion d'eau par exemple), depuis la température de recuit (TR) jusqu'au voisinage de 400°C, puis à compléter ce refroidissement par un refroidissement complémentaire par aspersion d'un fluide réfrigérant, tel l'eau, afin d'obtenir une température du matériau sensiblement égale à la température ambiante (TA) et ce, en minimisant la longueur de fil "tampon" dans les boucles de refroidissement.

TABLEAU II

| Essai n° | Passage TR à 400°C | | Passage 400°C à TA | | Dureté Vickers finale |
|---|---|---|---|---|---|
| | MR | Durée | MR | Durée | |
| 1 | eau | < 1 sec | eau | < 1 sec | 165 |
| 2 | air calme | 30 sec | air calme | plusieurs minutes | 115 |
| 3 | air soufflé | 10 à 15 sec | air soufflé | 1 min | 140 |
| 4 | air calme | 30 sec | eau | < 1 sec | 125 |
| MR : mode de refroidissement | | | | | |

Il s'ensuit que, de préférence, le refroidissement du tube comprend au moins une étape de refroidissement lent depuis environ la température de recristallisation (TR) jusqu'à une température intermédiaire et, éventuellement, au moins une étape de refroidissement rapide depuis environ la température intermédiaire jusqu'à la température ambiante (TA).

Avantageusement, l'étape de refroidissement lent a une durée d'au moins 10 secondes, de préférence d'au moins 20 secondes, et/ou l'étape de refroidissement rapide est réalisée au moyen d'un fluide réfrigérant et, de préférence, par aspersion d'eau.

Habituellement, la température intermédiaire est comprise entre 300°C et 550°C, de préférence de l'ordre de 400°C.

Avantageusement, au moins une partie de l'étape de chauffage par induction et/ou de l'étape de refroidissement lent est réalisée sous atmosphère inerte de protection afin d'éviter ou de minimiser toute oxydation superficielle du tube.

Le gaz inerte de protection utilisé est de l'azote, de l'argon ou un mélange de gazeux contenant l'un au moins de ces deux gaz, ou tout autre gaz ou mélange de gaz connu de l'homme de l'art.

## Revendications

1. Procédé de fabrication d'un tube métallique contenant des éléments de remplissage, comprenant au moins une étape de recuit de recristallisation réalisée par chauffage par induction à haute fréquence, ladite fréquence étant d'au moins 10 kHz.

2. Procédé selon la revendication 1, caractérisé en ce que la fréquence est d'au moins 100 kHz.

3. Procédé selon l'une des revendications 1 ou 2, caractérisé en ce que la fréquence est comprise entre 250 kHz et 500 kHz environ.

4. Procédé selon l'une des revendications 1 à 3, caractérisé en ce qu'au moins une étape de recuit de recristallisation est réalisée subséquemment à au moins une étape de réduction du diamètre du tube par laminage et/ou tréfilage

5. Procédé selon l'une des revendications 1 à 4, caractérisé en ce qu'il comprend, subséquemment à une étape de recuit de recristallisation, au moins une étape de refroidissement du tube.

6. Procédé selon la revendication 5, caractérisé en ce que le refroidissement du tube comprend au moins une étape de refroidissement lent depuis environ la température de recristallisation jusqu'à une température intermédiaire et, éventuellement, au moins une étape de refroidissement rapide depuis environ la température intermédiaire jusqu'à la température ambiante.

7. Procédé selon la revendication 6, caractérisé en ce que l'étape de refroidissement lent a une durée d'au moins 10 secondes, de préférence d'au moins 20 secondes, et/ou en ce que l'étape de refroidissement rapide est réalisée au moyen d'un fluide réfrigérant et, de préférence, par aspersion d'eau.

8. Procédé selon la revendication 6, caractérisé en ce que la température intermédiaire est comprise entre 300°C et 550°C, de préférence de l'ordre de 400°C.

9. Procédé selon l'une des revendications 1 à 8, caractérisé en ce que la température de recristallisation est supérieure ou égale à 700°C, de préférence supérieure ou égale à 750°C.

10. Procédé selon l'une des revendications 1 à 9, caractérisé en ce que les éléments de remplissage du tube comprennent au moins une poudre choisie parmi les poudres de fer, de ferro-silicium, de silico-manganèse, de manganèse, de ferro-silico-titane, de magnésium, d'aluminium et leurs mélanges.

11. Procédé selon les revendications 1 à 10, caractérisé en ce que le tube métallique est un fil fourré.

12. Procédé selon les revendications 1 à 11, caractérisé en ce qu'au moins une partie de l'étape de chauffage par induction et/ou de l'étape de refroidissement lent est réalisée sous atmosphère inerte de protection.

13. Fil fourré susceptible d'être obtenu par le procédé selon l'une des revendications 1 à 12.

14. Fil fourré selon la revendication 13, caractérisé en ce qu'il comprend une enveloppe métallique en acier doux.

15. Utilisation d'un fil fourré selon l'une des revendications 13 ou 14 pour la mise en oeuvre d'un procédé de soudage à l'arc électrique.

16. Procédé de soudage TIG, MIG, MAG, à l'arc submergé ou vertical sous laitier susceptible de mettre en oeuvre un fil fourré selon l'une des revendications 13 ou 14.

## RAPPORT DE RECHERCHE EUROPEENNE

Office européen
des brevets

Numéro de la demande

EP 98 40 2028

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 234 623 A (HOOGOVENS GROEP BV) 2 septembre 1987 --- | | B23K35/40 C21D9/60 |
| A | PATENT ABSTRACTS OF JAPAN vol. 015, no. 310 (M-1144), 8 août 1991 & JP 03 114695 A (KAWASAKI STEEL CORP), 15 mai 1991 * abrégé * --- | | |
| A | EP 0 489 167 A (NIPPON STEEL WELDING PROD ENG ;NIPPON STEEL CORP (JP)) 10 juin 1992 --- | | |
| A | US 3 499 804 A (CLARKE JOHN F) 10 mars 1970 --- | | |
| A | PATENT ABSTRACTS OF JAPAN vol. 007, no. 211 (M-243), 17 septembre 1983 & JP 58 107294 A (NITSUTETSU YOUSETSU KOGYO KK), 25 juin 1983 * abrégé * ----- | | |

DOMAINES TECHNIQUES
RECHERCHES (Int.Cl.6)

B23K
C21D

Le présent rapport a été établi pour toutes les revendications

| Lieu de la recherche | Date d'achèvement de la recherche | Examinateur |
|---|---|---|
| LA HAYE | 24 novembre 1998 | Mollet, G |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)